# EUROPÄISCHE PATENTSCHRIFT

(11) **EP 3 007 291 B1**
(45) Veröffentlichungstag und Bekanntmachung des Hinweises auf die Patenterteilung: **12.12.2018**
(21) Anmeldenummer: 15188609.0
(22) Anmeldetag: 06.10.2015
(51) Int. Cl.: H02G 3/32

(54) **DRAHTHALTER FÜR EINE LEUCHTE**
WIRE HOLDER FOR A LIGHT
SUPPORT DE CAQBLE POUR UNE LAMPE

(30) Priorität: 07.10.2014 DE 202014104799 U
(43) Veröffentlichungstag der Anmeldung: 13.04.2016
(73) Patentinhaber: Zumtobel Lighting GmbH, 6850 Dornbirn (AT)
(72) Erfinder: Frick, Joachim, 6833 Klaus (AT); Kilga, Patrick, 6840 Götzis (AT); Rüf, Wolfgang, 6850 Dornbirn (AT)
(74) Vertreter: Thun, Clemens

(56) Entgegenhaltungen:
- EP-A2- 2 365 597
- WO-A1-2011/114031
- DE-C1- 19 752 525
- DE-U1-202004 013 412
- DE-U1-202006 001 012
- US-A- 5 184 794
- US-A- 5 626 316
- US-A1- 2004 065 785
- US-A1- 2010 155 104
- "ONLINE KATALOG DER FIRMA RICHCO INC, KATALOGNUMMER OFB-BH-6-19 O.F. (BRACKET BLIND HOLE SERIES)", INTERNET CITATION, 14. November 2005 (2005-11-14), XP002355043, Gefunden im Internet: URL:http://www.richco-inc.com/group_detail s.asp?seccode=350&grpcode=130 [gefunden am 2005-11-14]

## Beschreibung

Die Erfindung betrifft einen Drahthalter für eine Leuchte.

Eine elektrische Leuchte weist zur Stromversorgung ihrer Lichtquelle elektrische Leitungen, hier auch einfach als "Drähte" bezeichnet, auf. Es ist bekannt, diese Drähte mithilfe von Drahthaltern an bzw. in der Leuchte in einer bestimmten Position bzw. Anordnung zu halten. Die Drahthalter sind dabei an einem Bauteil der Leuchte, beispielsweise an einer Leuchtenwanne oder Montageplatte oder - im Fall einer länglichen Leuchte - an einem balkenartigen Trägerbauteil fixiert.

Beispielsweise kommen entsprechende Drahthalter bei Leuchten in Form von länglichen Leuchtmodulen von Lichtbandsystemen zum Einsatz, wobei die Drähte mithilfe der Drahthalter überwiegend in Längsrichtung der Leuchtmodule in bzw. an diesen geführt sind.

Bekannt sind Drahthalter, welche manuell bestückt werden; in diesem Fall lassen sich Drähte in einen entsprechenden Drahtaufnahmebereich des Drahthalters manuell einschieben.

Abhängig davon, in welcher Weise ein entsprechendes Leuchtmodul zum Einsatz kommt, verlaufen an der Oberseite des Moduls unterschiedliche Leitungskombinationen. In einfachster Variante sind lediglich Leitungen für die Stromversorgung vorgesehen. Sobald allerdings die Leuchte auch zu einer Kommunikation genutzt wird, sind zusätzliche Leitungen eines Bussystems erforderlich. Weiterhin können noch zusätzliche Leitungen erforderlich sein, wenn die Leuchte als Notleuchte eingesetzt wird. Dabei ist aufgrund der unterschiedlichen Nutzung der Leitungen oft eine getrennte Führung erforderlich, um die sogenannte elektromagnetische Verträglichkeit zu gewährleisten. Das heißt, die Leitungen sollten derart verlegt werden, dass sie einen gewissen Mindestabstand zueinander aufweisen.

Aus der DE 20 2010 003 420 U1 ist ein Drahthalter mit einem Drahtaufnahmebereich bekannt, der durch zwei nach oben ragende, flexible Arme gebildet ist. An ihren oberen Endbereichen sind diese Arme so gestaltet sind, dass ein Draht von oben her in den Drahtaufnahmebereich eingeführt werden kann; beim Einführen wandern die beiden Arme zunächst etwas seitlich aus, und bewegen sich dann, nachdem der Draht vollständig in den Drahtaufnahmebereich eingebracht worden ist, aufgrund ihrer elastischen Eigenschaft wieder aufeinander zu. Die oberen Endbereiche der Arme weisen dabei Anlaufschrägen auf, so dass sich der Drahthalter auch für ein robotergestütztes Einbringen des Drahtes eignet.

Aus der DE 20 2004 013 412 U1 ist ein Kabelclip mit einem Grundkörper bekannt, von dem aus sich Halteschenkel nach oben erstrecken, durch die drei längliche Halteabschnitte für Patchkabel gebildet sind.

Aus dem "ONLINE KATALOG DER FIRMA RICHCO INC, KATALOGNUMMER OFB-BH-6-19 O.F. (BRACKET BLIND HOLE SERIES)", INTERNET CITATION, 14. November 2005 (2005-11-14), XP002355043 ist ein Halter für optische Fasern mit drei nebeneinander ausgebildeten Haltebereichen bekannt. Jeder der Haltebereiche weist zwei übereinander angeordnete Aufnahmebereiche für jeweils eine optische Faser auf.

Aus der WO 2011/114031 A1 ist ein Drahthalter für Drähte mit unterschiedlichen Stärken bekannt. Die DE 20 2006 001 012 U1 zeigt eine Halterung für elektronische Geräte, die dafür vorgesehen ist, seitlich an einer Schreibtischplatte angebracht zu werden. Aus der US 2010/0155104 A1 ist ein Halter für zwei Kabelstränge bekannt, bei dem die beiden Kabelstränge so weit von einander entfernt sind, dass es zu keiner unerwünschten gegenseitigen elektrischen Beeinflussung kommt. Die DE 197 52 525 C1 zeigt einen Rohrhalter mit Schwingungsdämpfung, der zwei nebeneinander ausgebildete Aufnahmebereiche mit Einführstegen aufweist. Aus der US 5,184,794 A ist ein Kabelhalter bekannt, der einen ersten Bereich für drei nebeneinander angeordnete Kabel aufweist sowie seitlich davon einen zweiten Bereich für ein weiteres Kabel.

Aus der US 5,626,316 ist ein Kabel-Clip bekannt, der sich mit Hilfe eines Federlappens in ein Aufnahmeloch eines Ständerwand-Profils einklemmen lässt. Aus der Schrift US 2004/0065785 A1 ist ein Drahthalter mit einem abgewinkelten Arm bekannt.

Der Erfindung liegt die Aufgabe zugrunde, einen verbesserten Drahthalter anzugeben. Der Drahthalter soll sich dafür eignen, bei einfacher Handhabung in vielen unterschiedlichen Fällen eingesetzt zu werden. Insbesondere soll der Drahthalter ein möglichst flexibles Positionieren von Drähten und einen reduzierten Montageaufwand der Leuchte ermöglichen.

Diese Aufgabe wird gemäß der Erfindung mit dem in dem unabhängigen Anspruch genannten Gegenstand gelöst. Besondere Ausführungsarten der Erfindung sind in den abhängigen Ansprüchen angegeben.

Gemäß der Erfindung ist ein Drahthalter für eine Leuchte vorgesehen, der einen zentralen Bereich mit einem Grundabschnitt aufweist, sowie einen ersten Arm und einen zweiten Arm zur Bildung eines ersten Drahtaufnahmebereichs. Dabei erstrecken sich der erste Arm und der zweite Arm von dem Grundabschnitt ausgehend in eine erste Richtung; sie weisen Endbereiche mit Anlaufschrägen für eine robotergestützte Drahtbestückung des ersten Drahtaufnahmebereichs auf. Weiterhin umfasst der Drahthalter einen Wandbereich, durch den ein zweiter Drahtaufnahmebereich gebildet ist, wobei der Wandbereich mit Bezug auf die erste Richtung auf einer ersten Seite des zentralen Bereichs ausgebildet ist.

Durch die Ausbildung eines zweiten Drahtaufnahmebereichs sind die Möglichkeiten, Drähte mithilfe des Drahthalters zu positionierten, vergrößert. Dabei lässt sich besonders einfach ein bestimmter Mindestabstand zwischen den beiden Drahtaufnahmebereichen realisieren. Der erste Drahtaufnahmebereich eignet sich dabei grundsätzlich für ein robotergestützte Einbringen von Drähten.

Erfindungsgemäß weist der Wandbereich eine Anlaufschräge zum Einführen eines Drahtes in den zweiten Drahtaufnahmebereich auf. Durch die Anlaufschräge ist ein Einbringen eines Drahtes in den zweiten Drahtaufnahmebereich erleichtert; außerdem lässt sich hierdurch die Gefahr verringern, dass sich ein Draht ungewollt aus dem zweiten Drahtaufnahmebereich heraus bewegt. Weiterhin weist der Wandbereich eine weitere Anlaufschräge auf, wobei zwischen der zuerst genannten Anlaufschräge und der weiteren Anlaufschräge ein Draht-Durchtrittsbereich gebildet ist, durch den hindurch ein Draht in den zweiten Drahtaufnahmebereich bewegt werden kann, wobei der Wandbereich derart elastisch gestaltet ist, dass beim Einbringen eines Drahtes in den zweiten Drahtaufnahmebereich der Draht die beiden Anlaufschrägen auseinanderdrückt und Letztere sich wieder aufeinander zu bewegen, wenn der Draht den Draht-Durchtrittsbereich passiert hat und sich vollständig in dem zweiten Drahtaufnahmebereich befindet.

Vorzugsweise erstreckt sich der erste Drahtaufnahmebereich weiter in die erste Richtung als der zweite Drahtaufnahmebereich. Hierdurch eignet sich der erste Drahtaufnahmebereich besonders für ein robotergestütztes Einbringen von Drähten.

Erfindungsgemäß ist der zweite Drahtaufnahmebereich länglich, so dass er eine Längsachse aufweist, wobei er sich mit seiner Längsachse im Wesentlichen senkrecht zu der ersten Richtung erstreckt, insbesondere mit der ersten Richtung einen Winkel einschließt, der zwischen 70° und 110° beträgt, vorzugsweise zwischen 80° und 100°. Hierdurch lässt sich der zweite Drahtaufnahmebereich vergleichsweise groß gestalten, so dass er sich zur Aufnahme mehrere Drähte eignet.

Erfindungsgemäß ist an dem ersten Arm ein, zur ersten Seite hin abstehender, abgewinkelter Armbereich ausgebildet ist, durch den ein dritter Drahtaufnahmebereich gebildet ist. Durch den dritten Drahtaufnahmebereich sind die Möglichkeiten zur Positionierung von Drähten nochmals weitergehend verbessert.

Vorzugsweise weist dabei der abgewinkelte Armbereich einen ersten Schenkel und einen zweiten Schenkel auf, wobei sich der erste Schenkel von dem ersten Arm ausgehend zur ersten Seite erstreckt und der zweite Schenkel sich von dem ersten Schenkel ausgehend entgegen der ersten Richtung erstreckt. Hierdurch ist eine besonders geeignete Ausbildung des dritten Drahtaufnahmebereichs ermöglicht.

Vorzugsweise ist an dem Wandbereich ein Ansatz ausgebildet, der sich zur ersten Seite nach schräg oben erstreckt. Hierdurch ist ein erleichtertes Einbringen von Drähten, sowohl in den zweiten Drahtaufnahmebereich, als auch in den dritten Drahtaufnahmebereich ermöglicht.

Vorzugsweise ist der Drahthalter derart gestaltet, dass sich der Ansatz und der zweite Schenkel des abgewinkelten Armbereichs mit Bezug auf die erste Richtung teilweise überlappen. Hierdurch ist die Gefahr weiterhin reduziert, dass sich ein Draht ungewollt aus dem zweiten oder aus dem dritten Drahtaufnahmebereich heraus bewegt.

Vorzugsweise ist der Drahthalter auf einer, der ersten Seite gegenüber liegenden zweiten Seite des zentralen Bereichs analog gestaltet wie auf der ersten Seite. Vorzugsweise ist er mit Bezug auf eine, durch den zentralen Bereich verlaufende, insbesondere parallel zu der ersten Richtung orientierten Mittelebene symmetrisch gestaltet. Hierdurch sind weitere Möglichkeiten zur Positionierung von Drähten eröffnet.

Vorzugsweise weist der Drahthalter weiterhin ein Rastelement zur Halterung des Drahthalters an einem Bauteil der Leuchte auf. Hierdurch lässt sich der Drahthalter besonders einfach an dem Bauteil der Leuchte befestigen.

Herstellungstechnisch vorteilhaft ist der Drahthalter erfindungsgemäß aus einem Stück gebildet, insbesondere aus einem Kunststoff.

Die Erfindung wird im Folgenden anhand eines Ausführungsbeispiels und mit Bezug auf die Zeichnungen näher erläutert. Es zeigen:
- Fig. 1: eine perspektivische Skizze eines Ausführungsbeispiels eines erfindungsgemäßen Drahthalters und
- Fig. 2: einen Querschnitt durch den Drahthalter.

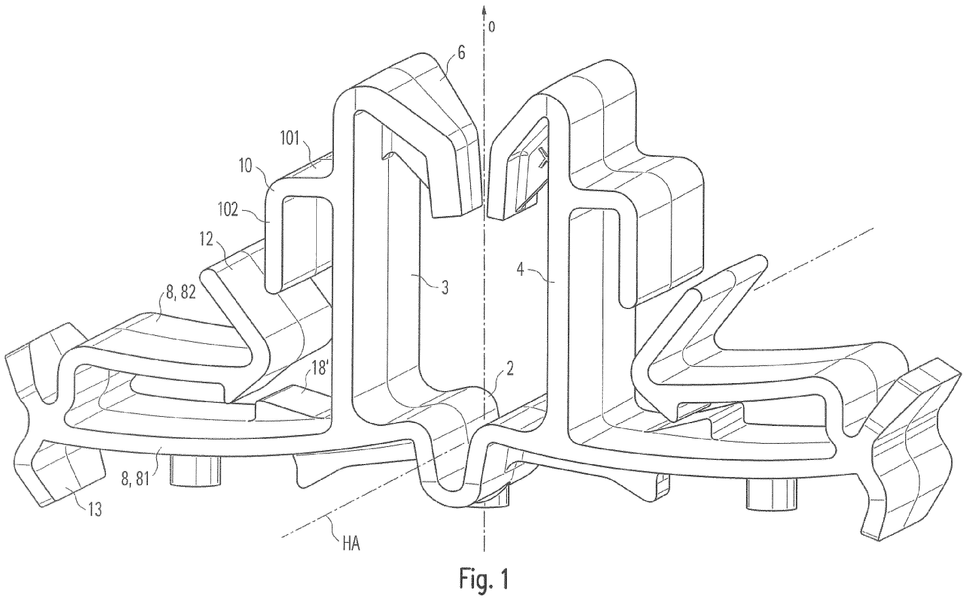

Fig. 1 zeigt eine perspektivische Skizze eines erfindungsgemäßen Drahthalters. Der Drahthalter ist dazu ausgestaltet, wenigstens einen Draht, der zur Stromversorgung einer Leuchte dient, in einer gewünschten Position zu halten; dabei ist der Drahthalter dafür vorgesehen, an einem Bauteil der Leuchte fixiert zu werden.

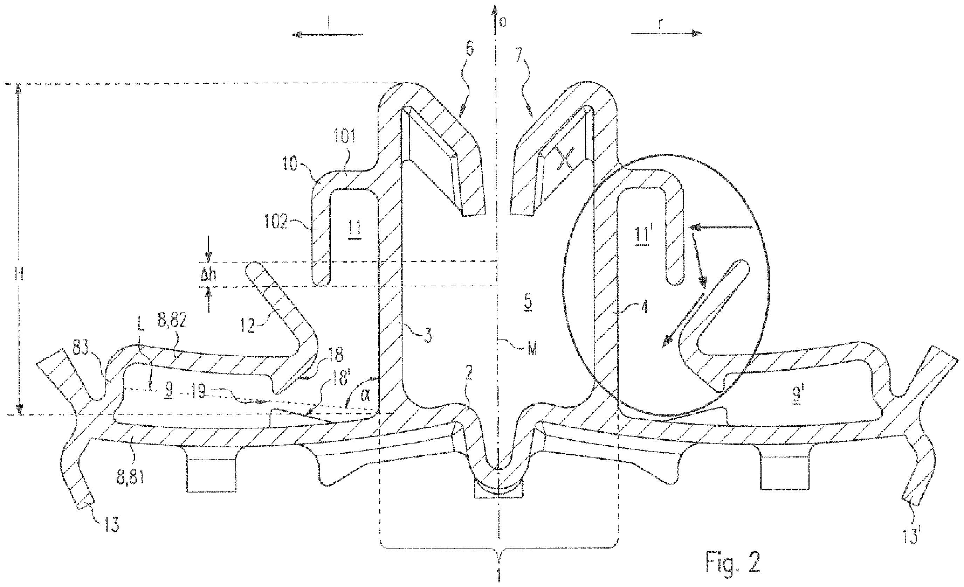

Beim gezeigten Beispiel weist der Drahthalter aufgrund seiner Form eine Hauptachse HA auf. In Fig. 2 ist ein Querschnitt durch den Drahthalter normal zu der Hauptachse HA skizziert. Der Drahthalter ist insbesondere zur Halterung wenigstens eines (in den Figuren nicht gezeigten) Drahtes ausgebildet, der sich zumindest in erster Näherung parallel zu der Hauptachse HA erstreckt.

Beim gezeigten Beispiel ist der Drahthalter dazu ausgestaltet, an einem (in den Figuren nicht gezeigten) balkenartigen Trägerbauteil einer Leuchte eines Lichtbandsystems montiert zu werden. Das Trägerbauteil der Leuchte erstreckt sich dabei, wenn der Drahthalter wie vorgesehen an dem Trägerbauteil angeordnet ist, mit seiner Längsachse parallel zu der Hauptachse HA. Durch den Drahthalter können dann dementsprechend insbesondere Drähte in Position gehalten werden, die sich im Wesentlichen parallel zu dem Trägerbauteil erstrecken.

Der Drahthalter weist einen zentralen Bereich 1 mit einem Grundabschnitt 2 auf. Von dem Grundabschnitt 2 ausgehend erstrecken sich ein erster Arm 3 und ein zweiter Arm 4 zur Bildung eines ersten Drahtaufnahmebereichs 5 in eine erste Richtung o. Wie in den Figuren gezeigt, kann vorgesehen sein, dass die erste Richtung o vertikal nach oben weist, wenn der Drahthalter wie für einen Betrieb vorgesehen ausgerichtet ist; in dieser Beschreibung wird von dieser Orientierung ausgegangen, dementsprechend erstrecken sich also die beiden Arme 3, 4 von dem Grundabschnitt 2 aus nach oben. Im Allgemeinen ist jedoch auch eine anderweitige Ausrichtung des Drahthalters für den Betrieb möglich. Der erste Arm 3 weist somit, ebenso wie der zweite Arm 4 mit Bezug auf den Grundabschnitt 2 eine Gesamthöhe H auf.

Die beiden Arme 3, 4 weisen an ihren freien Endbereichen Anlaufschrägen 6, 7 für eine robotergestützte Drahtbestückung des ersten Drahtaufnahmebereichs 5 auf.

Weiterhin weist der Drahthalter einen Wandbereich 8 auf, durch den ein zweiter Drahtaufnahmebereich 9 gebildet ist. Der Wandbereich 8 ist dabei mit Bezug auf die erste Richtung o auf einer ersten Seite 1 des zentralen Bereichs 1 ausgebildet, bei der in Fig. 2 gezeigten Betrachtung "links" des zentralen Bereichs 1.

Der Wandbereich 8 weist dabei eine Anlaufschräge 18 zum Einführen eines Drahtes in den zweiten Drahtaufnahmebereich 9 auf. Wie im gezeigten Beispiel der Fall, kann der Wandbereich 8 auch noch eine weitere Anlaufschräge 18' aufweisen, wobei zwischen der zuerst genannten Anlaufschräge 18 und der weiteren Anlaufschräge 18' ein Draht-Durchtrittsbereich 19 gebildet ist, durch den hindurch ein Draht in den zweiten Drahtaufnahmebereich 9 bewegt werden kann. Vorzugsweise ist der Wandbereich 8 derart elastisch gestaltet, dass beim Einbringen eines Drahtes in den zweiten Drahtaufnahmebereich 9 der Draht die beiden Anlaufschrägen 18, 18' auseinanderdrückt und Letztere sich wieder aufeinander zu bewegen, wenn der Draht den Draht-Durchtrittsbereich 19 passiert hat und sich vollständig in dem zweiten Drahtaufnahmebereich 9 befindet. Hierdurch wird die Gefahr verringert, dass sich der eingebrachte Draht ungewollt wieder aus dem zweiten Drahtaufnahmebereich 9 heraus bewegt. Durch die Wahl der Stelle, an der die Anlaufschräge 18 bzw. der Draht-Durchtrittsbereich 19 ausgebildet wird, lässt sich geeignet ein Mindestabstand zwischen dem ersten Drahtaufnahmebereich 5 und dem zweiten Drahtaufnahmebereich 9 festlegen. Dies ist vorteilhaft mit Bezug auf Erfordernisse der elektromagnetischen Verträglichkeit bei Betrieb der Leuchte.

Der Wandbereich 8 ist vorzugsweise - in einem Querschnitt normal zu der Hauptachse HA betrachtet - in erster Näherung U-förmig gestaltet, wobei einer der beiden entsprechenden U-Schenkel 81, 82 in den Grundabschnitt 2 übergeht. Die beiden U-Schenkel 81, 82 erstrecken sich dabei vorzugsweise zumindest in erster Näherung senkrecht zu der ersten Richtung o, hier also horizontal, wobei vorzugsweise derjenige der beiden U-Schenkel 81, 82 in den Grundabschnitt 2 übergeht, der sich weniger weit in die erste Richtung o erstreckt, hier also der entsprechende untere U-Schenkel 81. Auf diese Weise lässt sich eine insgesamt raumsparende Gestaltung des Drahthalters erzielen.

Erfindungsgemäß ist vorgesehen, dass sich der erste Drahtaufnahmebereich 5 weiter in die erste Richtung bzw. nach oben erstreckt als der zweite Drahtaufnahmebereich 9. Hierdurch eignet sich der erste Drahtaufnahmebereich 5 besonders für ein robotergestütztes Einbringen von Drähten.

Erfindungsgemäß ist der zweite Drahtaufnahmebereich 9 insgesamt länglich. Beispielsweise können hierzu die beiden U-Schenkel 81, 82 länger gestaltet sein als der, die beiden U-Schenkel 81, 82 verbindende Verbindungsschenkel 83. Dementsprechend weist der zweite Drahtaufnahmebereich 9 in diesem Fall eine Längsachse L auf; dabei erstreckt er sich mit seiner Längsachse L im Wesentlichen senkrecht zu der ersten Richtung o. Insbesondere ist die Gestaltung derart, dass die Längsachse L mit der ersten Richtung o einen Winkel α einschließt, der zwischen 70° und 110° beträgt, vorzugsweise zwischen 80° und 100°. Hierdurch lässt sich bei insgesamt kleinräumiger Gestaltung des Drahthalters ein geeignet großer Einführbereich für Drähte gestalten; dies ist vorteilhaft für die Handhabung.

Erfindungsgemäß ist an dem ersten Arm 3 ein, zur ersten Seite 1 hin bzw. nach links abstehender, abgewinkelter Armbereich 10 ausgebildet, durch den ein dritter Drahtaufnahmebereich 11 gebildet ist. Vorzugsweise weist dabei der abgewinkelte Armbereich 10 einen ersten Schenkel 101 und einen zweiten Schenkel 102 auf, wobei sich der erste Schenkel 101 von dem ersten Arm 3 ausgehend zur ersten Seite 1 bzw. nach links erstreckt und der zweite Schenkel 102 sich von dem ersten Schenkel 10 ausgehend entgegen der ersten Richtung o bzw. nach unten erstreckt.
Beim gezeigten Beispiel weist der abgewinkelte Armbereich 10 einen Ursprung am ersten Arm 3 in einer Höhe auf, die etwa einem Dreiviertel der Gesamthöhe H des ersten Arms 3 entspricht. Insbesondere kann vorgesehen sein, dass der abgewinkelte Armbereich 10 mit dem ersten Arm 3 in einer Höhe verbunden ist bzw. seinen Ursprung hat, die zwischen 50% und 90%, insbesondere zwischen 60% und 80% der Gesamthöhe H des ersten Arms 3 entspricht.

Mit Bezug auf die erste Richtung o erstrecken sich dabei die U-Schenkel 81, 82 vorzugsweise nicht bis zu dem Ursprung des abgewinkelten Armbereichs 10 am ersten Arm 3. Beispielsweise kann vorgesehen sein, dass sich die U-Schenkel 81, 82 bis in eine Höhe erstrecken, die weniger als 50%, insbesondere weniger als 40% der Gesamthöhe H des ersten Arms 3 entspricht. Hierdurch ist eine besonders geeignete raumsparende Gestaltung ermöglicht.

Weiterhin vorzugsweise ist an dem Wandbereich 8, hier an dem oberen U-Schenkel 82, ein Ansatz 12 ausgebildet, der sich zur ersten Seite 1 nach schräg oben erstreckt, hier also nach schräg links oben. Auf diese Weise lässt sich ein besonders geeigneter Einführbereich zum Einführen eines Drahtes in den zweiten Drahtaufnahmebereich 9 oder in den dritten Drahtaufnahmebereich 11 bilden. Insbesondere kann die Gestaltung derart sein, dass sich der Ansatz 12 und der zweite Schenkel 102 des abgewinkelten Armbereichs 10 mit Bezug auf die erste Richtung o teilweise überlappen, also ein entsprechender Überlappungsbereich Δh gebildet ist. Hierdurch ist die Gefahr, dass sich ein Draht ungewollt von dem Drahthalter löst, weitergehend verringert.

Vorzugsweise ist der Drahthalter auf einer, der ersten Seite 1 gegenüberliegenden zweiten Seite r des zentralen Bereichs 1 - hier also "rechts" von dem zentralen Bereich 1 - analog gestaltet wie auf der ersten Seite 1. Wie in den Figuren skizziert, kann insbesondere vorgesehen sein, dass der Drahthalter mit Bezug auf eine, durch den zentralen Bereich 1 verlaufende, insbesondere parallel zu der ersten Richtung o orientierten Mittelebene M symmetrisch gestaltet ist.

Dementsprechend kann auf der zweiten bzw. rechten Seite r ein entsprechender weiterer zweiter Drahtaufnahmebereich 9' gebildet sein, der analog bzw. symmetrisch zu dem zuerst genannten zweiten Drahtaufnahmebereich 9 gestaltet ist und ebenso ein entsprechender weiterer dritter Drahtaufnahmebereich 11' gebildet sein, der analog bzw. symmetrisch zu dem zuerst genannten dritten Drahtaufnahmebereich 11 gestaltet ist. Hierzu kann auf der rechten Seite insbesondere ein entsprechender weiterer abgewinkelter Armbereich 10' gebildet sein.

In Fig. 2 ist auf der rechten Seite durch drei Pfeile angedeutet, auf welchem Weg ein Draht in den weiteren zweiten Drahtaufnahmebereich 9' bzw. in den weiteren dritten Drahtaufnahmebereich 11' eingebracht werden kann. Natürlich ergibt aufgrund der hier symmetrischen Gestaltung auf der linken Seite der Mittelebene M ein entsprechender Einführweg für Drähte. Beim hier gezeigten Beispiel ist vorgesehen, dass die seitlichen Drahtaufnahmebereiche, also der zweite Drahtaufnahmebereich 9, der weitere zweite Drahtaufnahmebereich 9', der dritte Drahtaufnahmebereich 11 und der weitere dritte Drahtaufnahmebereich 11' manuell bestückt werden.

Weiterhin vorzugsweise weist der Drahthalter weiterhin ein Rastelement 13 zur Halterung des Drahthalters an einem Bauteil der Leuchte auf. Wie in den Figuren skizziert, können insbesondere zwei Rastelemente 13, 13' vorgesehen sein, die derart gestaltet sind, dass sich der Drahthalter mithilfe der beiden Rastelemente 13, 13' beispielsweise auf der Oberseite eines balkenartigen Trägerbauteils einer länglichen Leuchte aufclipsen lässt, wobei sich das Trägerbauteil, wie oben erwähnt, parallel zur Hauptachse HA erstreckt.

Vorzugsweise weist der Drahthalter einen, zur ersten Seite 1 bzw. nach links weisenden Endbereich auf, an dem das Rastelement 13 ausgebildet ist; weiterhin vorzugsweise weist der Drahthalter einen hierzu gegenüberliegenden weiteren Endbereich auf, an dem das weitere Rastelement 13' ausgebildet ist.

Vorzugsweise ist der Drahthalter aus einem Stück gebildet, insbesondere aus einem Kunststoff. Hierdurch lässt sich der Drahthalter herstellungstechnisch vorteilhaft mit einer geeigneten Elastizität gestalten.

Bei dem in den Figuren gezeigten Ausführungsbeispiel sind also insgesamt fünf Drahtaufnahmebereiche gebildet. Falls drei Drahtaufnahmebereiche ausreichend sind, kann beispielsweise auf die beiden abgewinkelten Armbereiche 10, 10' verzichtet werden, so dass der dritte Drahtaufnahmebereich 11 und der weitere dritte Drahtaufnahmebereich 11' wegfallen.

Wie bereits erwähnt, gestattet in erster Linie der erste Drahtaufnahmebereich 5 ein Bestücken mittels eines Roboters. Im Falle von Leuchten, bei denen nur sehr wenige Leitungen bzw. Drähte vorhanden sind, wird also in erster Linie dieser Bereich genutzt werden. Erst für den Fall, dass eine Vielzahl unterschiedlicher Leitungen bzw. Drähte zum Einsatz kommen, die auch speziell voneinander getrennt geführt werden müssen, kommen die zusätzlichen seitlichen Aufnahmebereiche zum Einsatz, also der zweite Drahtaufnahmebereich 9, der weitere zweite Drahtaufnahmebereich 9' und gegebenenfalls der dritte Drahtaufnahmebereich 11 und der weitere dritte Drahtaufnahmebereich 11'.

Grundsätzlich wäre es denkbar, mehrere Bereiche, die dem zentralen, per Roboter bestückbaren ersten Drahtaufnahmebereich 5 entsprechen, einzusetzen. In der Praxis ist allerdings die zentrale Anordnung des mit Hilfe eines Roboters bestückbaren Drahtaufnahmebereichs von Vorteil, da hierbei das Verlegen von Drähten, die von einer Rolle abgewickelt werden, besonders einfach ist. Bei einer versetzten Anordnung entsprechender Drahtaufnahmebereiche wäre es hingegen erforderlich, mehrere entsprechende Drahthalter hintereinander anzuordnen.

Abgesehen davon erfolgt für den Fall, dass eine Vielzahl von Drähten vorhanden ist, ohnehin in der Regel eher eine manuelle Bestückung, da für eine automatisierte Bestückung das System dann insgesamt zu komplex ist.

Der erfindungsgemäße Drahthalter weist einen zentral ausgebildeten, ersten Drahtaufnahmebereich 5 auf, der sich für eine Bestückung mit einem Roboter eignet. Außerdem weist er seitlich gelegene, weitere Drahtaufnahmebereiche 9, 9', 11, 11' auf, die sich insbesondere für eine manuelle Bestückung eignen. Durch die spezielle Gestaltung ist dabei ein Einbringen von Drähten in die seitlichen Drahtaufnahmebereiche besonders handhabungsfreundlich möglich.

## Patentansprüche

1. Drahthalter für eine Leuchte, aufweisend
- einen zentralen Bereich (1) mit einem Grundabschnitt (2), einem ersten Arm (3) und einem zweiten Arm (4) zur Bildung eines ersten Drahtaufnahmebereichs (5), wobei sich der erste Arm (3) und der zweite Arm (4) von dem Grundabschnitt (2) ausgehend in eine erste Richtung (o) erstrecken und Endbereiche mit Anlaufschrägen (6, 7) für eine robotergestützte Drahtbestückung des ersten Drahtaufnahmebereichs (5) aufweisen,
- einen Wandbereich (8), durch den ein zweiter Drahtaufnahmebereich (9) gebildet ist, wobei der Wandbereich (8) mit Bezug auf die erste Richtung (o) auf einer ersten Seite (1) des zentralen Bereichs (1) ausgebildet ist,
wobei der zweite Drahtaufnahmebereich (9) länglich ist, so dass er eine Längsachse (L) aufweist,
wobei sich der zweite Drahtaufnahmebereich (9) mit seiner Längsachse (L) im Wesentlichen senkrecht zu der ersten Richtung (o) erstreckt und der Drahthalter aus einem Stück gebildet ist,
**dadurch gekennzeichnet,**
**dass** der Wandbereich (8) eine Anlaufschräge (18) zum Einführen eines Drahtes in den zweiten Drahtaufnahmebereich (9) aufweist, sowie eine weitere Anlaufschräge (18'), wobei zwischen der zuerst genannten Anlaufschräge (18) und der weiteren Anlaufschräge (18') ein Draht-Durchtrittsbereich (19) gebildet ist, durch den hindurch ein Draht in den zweiten Drahtaufnahmebereich (9) bewegt werden kann, wobei der Wandbereich (8) derart elastisch gestaltet ist, dass beim Einbringen eines Drahtes in den zweiten Drahtaufnahmebereich (9) der Draht die beiden Anlaufschrägen (18, 18') auseinanderdrückt und Letztere sich wieder aufeinander zu bewegen, wenn der Draht den Draht-Durchtrittsbereich (19) passiert hat und sich vollständig in dem zweiten Drahtaufnahmebereich (9) befindet,
wobei an dem ersten Arm (3) ein, zur ersten Seite (1) hin abstehender, abgewinkelter Armbereich (10) ausgebildet ist, durch den ein dritter Drahtaufnahmebereich (11) gebildet ist.

2. Drahthalter nach Anspruch 1,
bei dem sich der erste Drahtaufnahmebereich (5) weiter in die erste Richtung (o) erstreckt als der zweite Drahtaufnahmebereich (9).

3. Drahthalter nach einem der vorhergehenden Ansprüche,
bei dem der zweite Drahtaufnahmebereich (9) mit seiner Längsachse (L) mit der ersten Richtung (o) einen Winkel (α) einschließt, der zwischen 70° und 110° beträgt, vorzugsweise zwischen 80° und 100°.

4. Drahthalter nach einem der vorhergehenden Ansprüche,
bei dem der abgewinkelte Armbereich (10) einen ersten Schenkel (101) und einen zweiten Schenkel (102) aufweist, wobei sich der erste Schenkel (101) von dem ersten Arm (3) ausgehend zur ersten Seite (1) erstreckt und der zweite Schenkel (102) sich von dem ersten Schenkel (101) ausgehend entgegen der ersten Richtung (o) erstreckt.

5. Drahthalter nach einem der vorhergehenden Ansprüche,
bei dem an dem Wandbereich (8) ein Ansatz (12) ausgebildet ist, der sich zur ersten Seite (1) nach schräg oben erstreckt.

6. Drahthalter nach Anspruch 5 in seiner Rückbeziehung auf den Anspruch 4,
der derart gestaltet ist, dass sich der Ansatz (12) und der zweite Schenkel (102) des abgewinkelten Armbereichs (10) mit Bezug auf die erste Richtung (o) teilweise überlappen.

7. Drahthalter nach einem der vorhergehenden Ansprüche,
der auf einer, der ersten Seite (1) gegenüberliegenden zweiten Seite (r) des zentralen Bereichs (1) analog gestaltet ist wie auf der ersten Seite (1).

8. Drahthalter nach Anspruch 7,
der mit Bezug auf eine, durch den zentralen Bereich (1) verlaufende, insbesondere parallel zu der ersten Richtung (o) orientierten Mittelebene (M) symmetrisch gestaltet ist.

9. Drahthalter nach einem der vorhergehenden Ansprüche,
weiterhin aufweisend
- ein Rastelement (13) zur Halterung des Drahthalters an einem Bauteil der Leuchte.

10. Drahthalter nach einem der vorhergehenden Ansprüche,
der aus einem Kunststoff gebildet ist.

## Claims

1. Wire holder for a luminaire, having
- a central region (1) with a base section (2), a first arm (3) and a second arm (4) for forming a first wire receiving region (5), wherein the first arm (3) and the second arm (4) extend, starting from the base section (2), in a first direction (o) and have end regions with run-on bevels (6, 7) for placing wires in the first wire receiving region (5) with robot assistance,
- a wall region (8) by which a second wire receiving region (9) is formed, wherein the wall region (8) is formed on a first side (1) of the central region (1) with respect to the first direction (o),
wherein the second wire receiving region (9) is elongate, so that it has a longitudinal axis (L),
wherein the second wire receiving region (9) extends, by way of its longitudinal axis (L), substantially perpendicularly in relation to the first direction (o) and the wire holder is formed from one piece,
**characterized**
**in that** the wall region (8) has a run-on bevel (18) for inserting a wire into the second wire receiving region (9), and also has a further run-on bevel (18'), wherein a wire passage region (19) is formed between the first-mentioned run-on bevel (18) and the further run-on bevel (18'), it being possible for a wire to move into the second wire receiving region (9) through the said wire passage region, wherein the wall region (8) is elastically designed in such a way that, when a wire is introduced into the second wire receiving region (9), the wire pushes the two run-on bevels (18, 18') apart and the said run-on bevels move towards one another again when the wire has passed the wire passage region (19) and is located fully in the second wire receiving region (9),
wherein an angled arm region (10) which projects in the direction of the first side (1) is formed on the first arm (3), a third wire receiving region (11) being formed by the said arm region.

2. Wire holder according to Claim 1,
in which the first wire receiving region (5) extends further in the first direction (o) than the second wire receiving region (9).

3. Wire holder according to either of the preceding claims,
in which the second wire receiving region (9) encloses, by way of its longitudinal axis (L), an angle (α) with the first direction (o), the said angle being between 70° and 110°, preferably between 80° and 100°.

4. Wire holder according to one of the preceding claims,
in which the angled arm region (10) has a first limb (101) and a second limb (102), wherein the first limb (101) extends, starting from the first arm (3), to the first side (1), and the second limb (102) extends, starting from the first limb (101), counter to the first direction (o).

5. Wire holder according to one of the preceding claims,
in which a projection (12) is formed on the wall region (8), the said projection extending obliquely upwards in relation to the first side (1).

6. Wire holder according to Claim 5 in its reference back to Claim 4,
which is configured in such a way that the projection (12) and the second limb (102) of the angled arm region (10) partially overlap with respect to the first direction (o).

7. Wire holder according to one of the preceding claims,
which is configured on a second side (r) of the central region (1), which second side is situated opposite the first side (1), in the same way as on the first side (1).

8. Wire holder according to Claim 7,
which is configured in a symmetrical manner with respect to a central plane (M) which runs through the central region (1), in particular is oriented parallel in relation to the first direction (o).

9. Wire holder according to one of the preceding claims,
further having
- a latching element (13) for holding the wire holder on a component of the luminaire.

10. Wire holder according to one of the preceding claims,
which is formed from a plastic.

## Revendications

1. Support de fil pour une lampe, comportant
- une région centrale (1) munie d'une section de base (2), d'un premier bras (3) et d'un deuxième bras (4) pour former une première région de réception de fil (5), dans lequel le premier bras (3) et le deuxième bras (4) s'étendent depuis la section de base (2) dans une première direction (o) et comportent des régions d'extrémité présentant des pentes de départ (6, 7) pour une mise en place de fil assistée par robot dans la première région de réception de fil (5),
- une région de paroi (8) formant une deuxième région de réception de fil (9), dans lequel la région de paroi (8) est réalisée sur un premier côté (1) de la région centrale (1) par rapport à la première direction (o),
dans lequel la deuxième région de réception de fil (9) est allongée, de sorte qu'elle présente un axe longitudinal (L),
dans lequel la deuxième région de réception de fil (9) s'étend de manière à ce que son axe longitudinal (L) soit sensiblement perpendiculaire à la première direction (o) et le support de fil est formé d'une seule pièce,
**caractérisé en ce que**
la région de paroi (8) présente une pente de départ (18) permettant d'introduire un fil dans la deuxième région de réception de fil (9), et une autre pente de départ (18'), dans lequel une région de passage de fil (19) est formée entre la pente de départ (18) mentionnée en premier lieu et l'autre pente de départ (18'), à travers laquelle un fil peut être déplacé dans la deuxième région de réception de fil (9), dans lequel la région de paroi (8) est formée de manière à présenter une élasticité telle que lorsqu'un fil est introduit dans la deuxième région de réception de fil (9), le fil repousse les deux pentes de départ (18, 18') l'une de l'autre et celles-ci se déplacent l'une vers l'autre à nouveau lorsque le fil a passé la région de passage de fil (19) et se trouve entièrement dans la deuxième région de réception de fil (9),
dans lequel une région de bras coudée (10) faisant saillie vers le premier côté (1) est réalisée sur le premier bras (3), à travers laquelle une troisième région de réception de fil (11) est formée.

2. Support de fil selon la revendication 1, dans lequel la première région de réception de fil (5) s'étend plus loin dans la première direction (o) que la deuxième région de réception de fil (9).

3. Support de fil selon l'une des revendications précédentes, dans lequel la deuxième zone de réception de fil (9) délimite avec son axe longitudinal (L) et avec la première direction (o) un angle (α) compris entre 70° et 110°, de préférence entre 80° et 100°.

4. Support de fil selon l'une des revendications précédentes, dans lequel la région de bras coudée (10) présente un premier segment (101) et un deuxième segment (102), dans lequel le premier segment (101) s'étend depuis le premier bras (3) vers le premier côté (1) et le deuxième segment (102) s'étend depuis le premier segment (101) en sens opposé à la première direction (o).

5. Support de fil selon l'une des revendications précédentes, dans lequel un col (12), qui s'étend obliquement vers le haut vers le premier côté (1), est formé sur la région de paroi (8).

6. Support de fil selon la revendication 5 lorsqu'elle fait référence à la revendication 4, qui est configuré de manière à ce que le col (12) et le deuxième segment (102) de la région de bras coudée (10) se chevauchent partiellement par rapport à la première direction (o).

7. Support de fil selon l'une des revendications précédentes, qui est configuré sur un deuxième côté (r) de la région centrale (1) opposé au premier côté (1) de manière semblable au premier côté (1).

8. Support de fil selon la revendication 7, qui est configuré symétriquement par rapport à un plan central (M) s'étendant à travers la région centrale (1), en particulier parallèlement à la première direction (o).

9. Support de fil selon l'une des revendications précédentes, comprenant en outre
- un élément d'encliquetage (13) destiné à maintenir le support de fil sur un composant de la lampe.

10. Support de fil selon l'une des revendications précédentes, qui est en matière plastique.
